# EUROPÄISCHE PATENTANMELDUNG

(11) **EP 1 562 128 A2**
(43) Veröffentlichungstag der Anmeldung: **10.08.2005**
(21) Anmeldenummer: 05001506.4
(22) Anmeldetag: 26.01.2005
(51) Int. Cl.: G06F 17/30

(54) **Elektronisches Datenverarbeitungssystem mit Datenspeicher- und Datenaktualisierungsmitteln**

(30) Priorität: 27.01.2004 DE 102004004921
(71) Anmelder: Weiss, Frank, 78479 Reichenau (DE); Hedrich, Kilian, 78462 Konstanz (DE)
(72) Erfinder: Weiss, Frank, 78479 Reichenau (DE); Hedrich, Kilian, 78462 Konstanz (DE)
(74) Vertreter: Patentanwälte Ruff, Wilhelm, Beier, Dauster & Partner

(57) **Zusammenfassung**

Die Erfindung bezieht sich auf ein elektronisches Datenverarbeitungssystem, das Datenspeichermittel zur Speicherung von vorgebbaren Primärdaten und Sekundärdaten, Sekundärdaten-Zuordnungsmittel zum Bereitstellen einer anzeigbaren Verknüpfung wenigstens eines vorgebbaren Sekundärdatensatzes mit wenigstens einem zugeordneten Primärdatensatz sowie Primärdaten-Aktualisierungsmittel zum Aktualisieren von gespeicherten Primärdaten mit einlesbaren Primärneudaten umfasst.

Erfindungsgemäß sind die Primärdaten-Aktualisierungsmittel darauf ausgelegt, zur Aktualisierung der gespeicherten Primärdatensätze nicht zu ändernde Primärdaten in den Datenspeichermitteln gespeichert zu belassen und zu ändernde Primärdaten durch Einspeichern der zugehörigen Primärneudaten zu ersetzen. Des weiteren sind Sekundärdaten-Aktualisierungsmittel vorgesehen, die Mittel zur Erkennung einer Aktualisierungs-Neuspeicherung eines Primärdatensatzes, mit dem ein Sekundärdatensatz verknüpft ist, Mittel zum Anzeigen eines solchen Sekundärdatensatzes, nutzerbetätigbare Steuerungseingabemittel zur Steuerung einer Sekundärdatensatzaktualisierung und Sekundärdaten-Neuspeicherungsmittel zum Neuspeichern eines mit einem aktualisierend geänderten Primärdatensatz verknüpften Sekundärdatensatzes umfassen.

## Beschreibung

Die Erfindung bezieht sich auf ein elektronisches Datenverarbeitungssystem mit Datenspeichermitteln zur Speicherung von vorgebbaren Primärdaten und Sekundärdaten, Sekundärdaten-Zuordnungsmitteln zum Bereitstellen einer anzeigbaren Verknüpfung wenigstens eines vorgebbaren Sekundärdatensatzes mit wenigstens einem zugeordneten Primärdatensatz sowie mit Primärdaten-Aktualisierungsmitteln zum Aktualisieren von gespeicherten Primärdaten mit einlesbaren Primärneudaten.

Derartige elektronische Datenverarbeitungssysteme sind in vielfältiger Form bekannt, wobei die Art der gespeicherten Primärdaten und der mit diesen verknüpften Sekundärdaten je nach Anwendungsfall in ihrem Dateninhalt, d.h. in ihrer Bedeutung und ihrem Zweck, beliebig variieren können. So ist z.B. ein elektronisches Datenverarbeitungssystem vom C. H. Beck Verlag in Gebrauch, bei dem die Primärdatensätze Textinhalte einer Gesetzessammlung und die Sekundärdatensätze textliche Kommentierungen darstellen, die mit einem jeweiligen Gesetzesparagraphen verknüpft sind. Der Systemnutzer hält die Daten z.B. in einem PC. Aktualisierungen werden über CD-ROM oder über eine Anbindung an eine Online-Datenbank angeboten. Dabei werden pro Aktualisierung jeweils alle Primärdaten, d.h. die gesamte Gesetzessammlung, durch die neuen Primärdaten ersetzt, unabhängig davon, ob sich die einzelnen Primärdatensätze in der aktualisierten Version gegenüber der Vorversion geändert haben oder nicht. Kommentierungen können als Sekundärdaten mit einer jeweiligen Primärdatenseite, die den Text eines Gesetzesparagraphen darstellt, verknüpft werden und werden bei einer Primärdatenaktualisierung unreflektiert übernommen. Als Alternative bietet der Verlag eine verlagsseitige Pflege automatischer Verweiskommentierungen zu Fundstellen an. Auch von anderen Anbietern sind elektronische Gesetzestexte zur Implementierung in Systemen auf dem Markt, die nutzerseitig z.B. einen mobilen Rechner, wie einen sogenannten Palm-Rechner, Pocket-PC oder Tablet-PC, zur Verarbeitung der Gesetzestextdaten umfassen. Neben dem Lesen der Primärdaten und der Verknüpfung von Kommentierungsdaten als Sekundärdaten mit jeweils einer ganzen Primärdatenseite erlauben diese Systeme typischerweise ein Navigieren in den Primärdaten, einfache Suchen nach bestimmten Zeichenketten bzw. Textworten und ein Setzen von elektronischen Lesezeichen an eine Primärdatenseite.

In der Patentschrift US 6.389.461 B1 ist ein elektronisches Datenverarbeitungssystem beschrieben, bei dem ein zentraler Basissystemteil Primärdatensätze mit Versionsinformation zum Abruf durch benutzerseitige Endgeräte bereithält. Das jeweilige Endgerät kann abgerufene Primärdatensätze anzeigen und/oder in ihm abgespeicherte Primärdatensätze unter Berücksichtigung der Versionsinformation bei Bedarf aktualisieren. Primärdatensätze mit übereinstimmender Versionsnummer, die folglich keine Änderungen enthalten, können bei einem solchen Aktualisierungsvorgang unverändert verbleiben, die anderen Primärdatensätze werden durch die abgerufene neue Version ersetzt. Außerdem können von einem Benutzer am Endgerät manuell Sekundärdatensätze erstellt und mit einem zugehörigen Primärdatensatz verknüpft werden. Der Benutzer kann bei Bedarf Primär- und/oder Sekundärdatensätze löschen, die in seinem Endgerät gespeichert sind.

In der Offenlegungsschrift US 2002/0049828 A1 ist ein elektronisches Datenverarbeitungssystem zur Verarbeitung von Kontakt-/Adressinformationen offenbart, die primäre Kontaktinformationen als Primärdatensätze und sekundäre Kontaktinformationen als Sekundärdatensätze umfassen und von einem jeweiligen Systemnutzer eingegeben werden können. Das System prüft, ob zu einer sekundären Kontaktinformation innerhalb eines vorgebbaren Übereinstimmungsgrades eine entsprechende primäre Kontaktinformation vorliegt und ersetzt bejahendenfalls die sekundäre Kontaktinformation durch einen Verweis auf die entsprechende primäre Kontaktinformation. Änderungen in den primären Kontaktinformationen werden auf diese Weise automatisch denjenigen Nutzern verfügbar gemacht, in deren sekundären Kontaktinformationen ein Verweis auf die betreffende primäre Kontaktinformation enthalten ist.

In der Patentschrift US 5.870.770 ist ein elektronisches Datenverarbeitungssystem beschrieben, in welchem eine Dokumentenverwaltung mit verknüpfter Darstellung von Primärdaten und zugehörigen Sekundärdaten auf einem Bildschirm implementiert ist.

In der Patentschrift EP 0 573 171 B1 ist ein elektronisches Datenverarbeitungssystem mit Primärdatenspeicherung und Primärdatenaktualisierungsfunktion beschrieben, das insbesondere als rechnergestütztes Wartungs- und Reparatur-Informationssystem für zu wartende Apparaturen ausgebildet sein kann und als Datenspeichermittel eine technische Datenbank umfasst, in der Veröffentlichungen elektronisch gespeichert sind und die eine Autoritätsdateidatenbank enthält, die so strukturiert ist, dass Beziehungen zwischen solchen Veröffentlichungen bereitgestellt werden. Das Aktualisieren erfolgt durch Ersetzen von CD-ROMs als Datenspeichermedium der Datenbank durch entsprechend aktualisierte CD-ROMs.

In der Patentschrift EP 0 640 230 B1 und in der Offenlegungsschrift GB 2 203 571 A sind vernetzte elektronische Datenverarbeitungssysteme beschrieben, bei denen Systemnutzer über nutzerseitige Client-Rechner mit einem zentralenseitigen Server-Rechner in Verbindung stehen und zentralenseitig gehaltene Primärdaten z.B. durch technische Dokumentationen und Regelwerke für Flugzeuge oder durch elektronische Briefpost gebildet sind. Die Aktualisierung der Primärdaten im Datenspeicher des nutzerseitigen Client-Rechners erfolgt nutzerangefordert, wobei der Server-Rechner die Aktualisierung des Client-Rechners vorzugsweise automatisch vornimmt.

Der Erfindung liegt als technisches Problem die Bereitstellung eines elektronischen Datenverarbeitungssystems der eingangs genannten Art zugrunde, das einen hohen Nutzungs- und Bedienkomfort aufweist, insbesondere bezüglich seines technischen Betriebsverhaltens zur Verarbeitung der Sekundärdatensätze bei Primärdatenaktualisierungen.

Die Erfindung löst dieses Problem durch die Bereitstellung eines elektronischen Datenverarbeitungssystems mit den Merkmalen des Anspruchs 1.

Erfindungsgemäß sind die Primärdaten-Aktualisierungsmittel darauf ausgelegt, bei einer Aktualisierung nur die zu ändernden Primärdaten durch die entsprechenden Primärneudaten in den Datenspeichermitteln zu ersetzen und die nicht zu ändernden Primärdaten unverändert in den Datenspeichermitteln zu belassen. Dies reduziert in den meisten Fällen, in denen nur ein geringerer Teil der Primärdaten bei einer Aktualisierung tatsächlich verändert wird, den Aktualisierungsaufwand und somit auch den Systembetriebsaufwand und etwaigen Zwischenspeicherbedarf deutlich, insbesondere hinsichtlich der Menge an zur Aktualisierung bereitzuhaltenden Primärneudaten und damit der Menge an neu einzuspeichernden Primärdaten. Da die nicht zu ändernden Primärdatensätze bei einer Aktualisierung unverändert belassen werden, lassen sich in einfacher Weise, sozusagen automatisch, die Verknüpfungen von Sekundärdatensätzen mit solchen Primärdatensätzen beibehalten.

Wenn zu einem Primärdatensatz, der bei einer Aktualisierung geändert, d.h. neu gespeichert wird, eine Verknüpfung eines Sekundärdatensatzes besteht, ermöglichen die Sekundärdaten-Aktualisierungsmittel eine vorteilhafte Behandlung eines solchen Sekundärdatensatzes, indem sie ihn zur Anzeige bringen und eine Neuspeicherung desselben in geänderter oder unveränderter Form von einer Betätigung zugehöriger nutzerbetätigbarer Steuerungseingabemittel abhängig machen. Somit wird es einem Systemnutzer durch die Sekundärdaten-Aktualisierungsmittel ermöglicht, Sekundärdatensätze, die mit aktualisierend zu ändernden Primärdatensätzen verknüpft sind, zu erkennen und bei Bedarf an den aktualisierten Primärdatensatz anzupassen. Es kann dadurch vermieden werden, dass ein mit einem aktualisierend geänderten Primärdatensatz verknüpfter Sekundärdatensatz ohne Nutzerintervention unreflektiert beibehalten wird, obwohl er eventuell nicht mehr zum aktualisierend geänderten Primärdatensatz passt, oder durch die Primärdatensatzaktualisierung einfach in Wegfall kommt. Dies realisiert eine programmtechnische Sekundärdatenbehandlung bei Primärdatenaktualisierungen mit hohem Nutzungs- und Bedienkomfort, indem mit geänderten Primärdatensätzen verknüpfte Sekundärdatensätze während des Aktualisierungsvorgangs interaktiv vom Systemnutzer in gewünschter Weise mitaktualisiert werden können.

In einer Weiterbildung der Erfindung nach Anspruch 2 umfassen die Steuerungseingabemittel zur Sekundärdatensatzaktualisierung ein nutzerbetätigbares Dateneingabemittel, um einen betroffenen, d.h. mit einem aktualisierend geänderten Primärdatensatz verknüpften Sekundärdatensatz ändern zu können, und/oder ein nutzerbetätigbares Bestätigungseingabemittel, um den betroffenen Sekundärdatensatz zu bestätigen, d.h. unverändert beizubehalten, und/oder ein nutzerbetätigbares Löscheingabemittel, um die Verknüpfung des betroffenen Sekundärdatensatzes mit dem aktualisierend geänderten Primärdatensatz zu löschen, wobei je nach Bedarf nur die Verknüpfung oder der Sekundärdatensatz insgesamt gelöscht werden kann.

In einer Weiterbildung der Erfindung nach Anspruch 3 umfasst das elektronische Datenverarbeitungssystem eine Benutzerschnittstelle mit interaktiven optischen Anzeigemitteln, die eine Anzeigemaske zum Anzeigen von Sekundärdaten und eine Steuerungseingabemaske beinhalten, welche als nutzerbetätigbares Steuerungseingabemittel zur Steuerung von Sekundärdatensatzaktualisierungen fungieren kann. Damit kann ein Systemnutzer sehr komfortabel z.B. auf einer grafischen Benutzeroberfläche Sekundärdatensätze, die mit aktualisierend geänderten Primärdatensätzen verknüpft sind, während einer Primärdatensatzaktualisierung einsehen und nach Bedarf ändern, d.h. aktualisieren.

Ein nach Anspruch 4 weitergebildetes elektronisches Datenverarbeitungssystem beinhaltet Sekundärdatensatz-Klassifizierungsmittel, die eine Klassifizierung von Sekundärdatensätzen in mehrere vorgebbare Sekundärdatensatztypen ermöglichen und nutzerbetätigbare Auswahleingabemittel beinhalten, durch die ein Systemnutzer für einen jeweiligen Sekundärdatensatz einen zugehörigen Sekundärdatensatztyp auswählen kann. Mit dieser Funktionalität können verschiedene Typen von Sekundärdatensätzen generiert und mit einem oder mehreren Primärdatensätzen verknüpft werden. Der jeweilige Typ eines Sekundärdatensatzes kann je nach Vorgabe bzw. Systemimplementierung Auswirkungen z.B. auf die Art der Verknüpfung, die Darstellungsweise etc. haben. So ist in weiterer Ausgestaltung der Erfindung nach Anspruch 5 vorgesehen, dass die Verknüpfung mit Hilfe entsprechender Verknüpfungsanzeigemittel durch ein vom Sekundärdatensatztyp abhängiges Symbol bei der Wiedergabe eines zugeordneten Primärdatensatzes angezeigt wird.

In einer Weiterbildung der Erfindung nach Anspruch 6 beinhalten die Sekundärdatensatz-Zuordnungsmittel Bezeichnungs- und/oder Markierungsmittel, durch die ein Systemnutzer in die Lage versetzt wird, einen Ziel-Primärdatensatz, mit dem ein Sekundärdatensatz verknüpft werden soll, zu bezeichnen oder zu markieren, und Verknüpfungserzeugungsmittel generieren dann eine Verknüpfung eines nutzerseitig eingegebenen oder aus den gespeicherten Primärdaten ausgewählten Sekundärdatensatzes mit dem Ziel-Primärdatensatz.

Eine Weiterbildung der Erfindung nach Anspruch 7 ermöglicht die Verknüpfung eines Sekundärdatensatzes mit einem Primärdatensatz an einer vorgebbaren Stelle desselben, d.h. an einem vorgebbaren Datensatzteil des Primärdatensatzes, im Fall von Texten als Primärdatensätze z.B. an einem vorgebbaren Absatz, Wort, Buchstaben, einer Zahl oder dergleichen. In weiterer Ausgestaltung dieser Maßnahme kann gemäß Anspruch 8 die Stelle eines Primärdatensatzes, mit welcher ein Sekundärdatensatz verknüpft ist, auf Nutzeranforderung hin bei der Wiedergabe der Primärdaten unterscheidbar angezeigt werden. Ein Betrachter kann dadurch leicht erkennen, mit welchem Datensatzteil des Primärdatensatzes der Sekundärdatensatz verknüpft ist.

In einer Weiterbildung der Erfindung nach Anspruch 9 ist eine Archivierungsfunktionalität für bei einer Aktualisierung ersetzte Primär- und/oder Sekundärdatensätze vorgesehen, mit welcher solche ersetzten Datensätze wieder abgerufen werden können.

Eine Weiterbildung der Erfindung nach Anspruch 10 sieht bei der Primärdatenwiedergabe vor, dass diejenigen Datenteile, die sich bei der letzten Aktualisierung geändert haben, unterscheidbar angezeigt werden. Dies erleichtert dem Betrachter die Erkennung, welche Primärdatensatzteile aktualisiert worden sind.

In einer Weiterbildung der Erfindung nach Anspruch 11 umfasst das elektronische Datenverarbeitungssystem einen oder mehreren Clientrechner, in denen jeweils die Datenspeichermittel, die Sekundärdaten-Zuordnungsmittel, die Primärdaten-Aktualisierungsmittel und die Sekundärdaten-Aktualisierungsmittel enthalten sind. Zusätzlich kann der jeweilige Client-Rechner bei Bedarf die Sekundärdatensatz-Klassifizierungsmittel, die Archivierungsmittel und/oder die Mittel zur unterscheidbaren Anzeige von bei Aktualisierung geänderten Primärdatensatzteilen umfassen. Der jeweilige Client-Rechner dient dadurch als Aktualisierungsrechner, wobei ihm Primärneudaten zur Primärdatenaktualisierung z.B. von einem Server-Rechner, an den die Client-Rechner angeschlossen sind, direkt zugeführt oder ihm z.B. mittels transportablem Datenträger verfügbar gemacht werden. Der Client-Rechner kann insbesondere dafür eingerichtet sein, den Datenvergleich zwischen gespeichertem Primärdatensatz und Primärneudatensatz bei einem Aktualisierungsvorgang vorzunehmen und für die unterscheidbare Anzeige der bei der Aktualisierung geänderten Primärdatensatzteile zu sorgen.

In einer weiteren Ausgestaltung nach Anspruch 12 ist der jeweilige Client-Rechner dafür eingerichtet, die Sekundärdatenverarbeitung in wenigstens zwei unterschiedlichen Betriebsarten vorzunehmen, wobei er generierte Sekundärdaten in einer ersten Betriebsart nur für lokalen Zugriff abspeichert, während er sie in einer zweiten Betriebsart zusätzlich einem oder mehreren weiteren Rechnern des Systems verfügbar macht.
Vorteilhafte Ausführungsformen der Erfindung sind in den Zeichnungen dargestellt und werden nachfolgend beschrieben. Hierbei zeigen:
- Fig. 1: eine schematische Blockdiagrammdarstellung erfindungswesentlicher Teile eines elektronischen Datenverarbeitungssystems mit Datenaktualisierungsfunktionalität für Primärdaten und mit diesen verknüpften Sekundärdaten,
- Fig. 2: ein schematisches Anwendungsfalldiagramm zur Veranschaulichung eines Vorgangs zur Verknüpfung eines Sekundärdatensatzes mit einem Primärdatensatz,
- Fig. 3: ein Flussdiagramm zur Veranschaulichung eines Datenaktualisierungsvorgangs,
- Fig. 4: ein Flussdiagramm zur Veranschaulichung eines Sekundärdatensatz-Aktualisierungsvorgangs,
- Fig. 5: ein Flussdiagramm zur Veranschaulichung einer Typzuordnung für Sekundärdatensätze,
- Fig. 6: eine Bildschirmfensterdarstellung zur Primärdatenwiedergabe mit Sekundärdatensatz-Verknüpfungssymbolen und
- Fig. 7: eine Darstellung einer Eingabemaske einer grafischen Benutzeroberfläche zur Sekundärdatensatzaktualisierung gemäß Fig. 4.

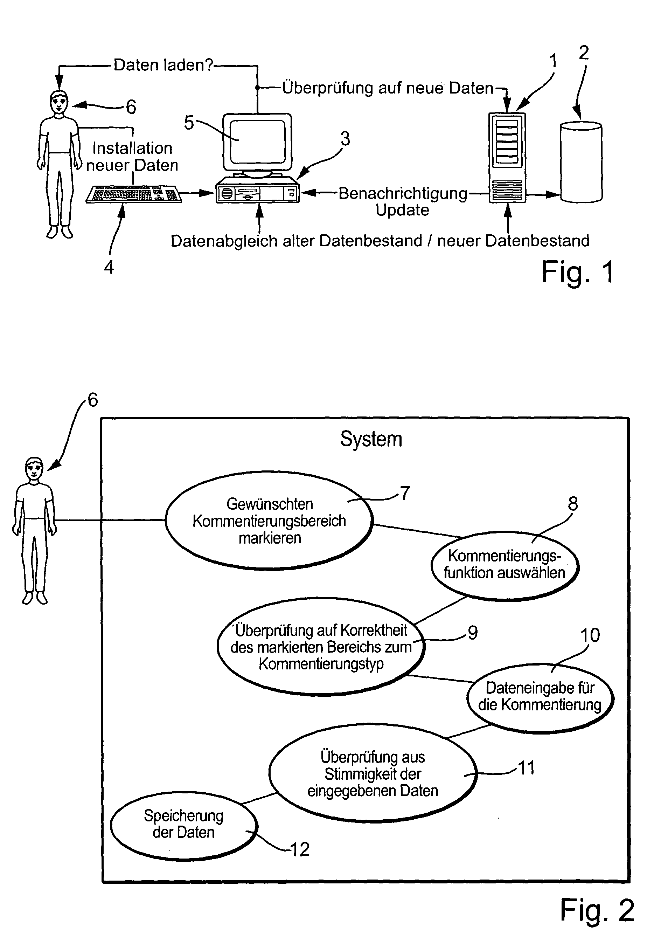

Fig. 1 veranschaulicht als schematisches Blockdiagramm einen erfindungswesentlichen Teil eines elektronischen Datenverarbeitungssystems mit Datenaktualisierungsfunktionalität für Primärdaten und für mit diesen verknüpfte Sekundärdaten. Wie daraus ersichtlich, beinhaltet dieses System einen Server-Rechner 1 mit daran angeschlossenen Datenspeichermitteln in Form einer Datenbank 2 zur Speicherung von Primärdaten. Bei diesen Primärdaten kann es sich um Daten beliebigen Inhalts handeln, wie Textinhalte z.B. einer Gesetzessammlung oder Wartungs- oder Diagnosedaten oder andere charakteristische Daten technischer Systeme. Von Bedeutung ist vorliegend, dass die Primärdaten in der serverseitigen Datenbank 2 von Zeit zu Zeit eine Aktualisierung erfahren und sich dabei wenigstens teilweise ändern können.

Mit dem Server-Rechner 1 stehen über ein entsprechendes Netzwerk ein oder mehrere Client-Rechner 3 in Datenaustauschverbindung, von denen in Fig. 1 stellvertretend ein Client-Rechner 3 in einer Arbeitsstation-Implementierung dargestellt ist. Die nutzerseitige Arbeitsstation ("Workstation") umfasst außer dem zugehörigen Rechner 3 eine Benutzerschnittstelle mit Eingabemitteln 4, wie einer Tastatur und einer Computer-Maus, und interaktiven optischen Anzeigemitteln, die einen Bildschirm 5 und auf dem Bildschirm 5 durch den Client-Rechner 3 anzeigbare, interaktive Benutzeroberflächenmasken umfassen.

Der Client-Rechner 3 umfasst außer seinem eigentlichen Rechnerteil insbesondere auch einen Datenspeicher zur Speicherung von Primärdaten, die beispielsweise vom Server-Rechner 1 übermittelt werden, und von zugehörigen Sekundärdaten. Sekundärdaten sind hierbei dadurch als solche definiert, dass sie jeweils mit ausgewählten Primärdaten in einer verknüpften Beziehung stehen und von einem Systemnutzer 6 durch Interaktion mit dem Client-Rechner 3 generiert und geändert werden können, d.h. der Systemnutzer 6 kann einen Sekundärdatensatz generieren oder vorgeben und mit einem oder mehreren Primärdatensätzen aus den im Client-Rechner 3 gespeicherten Primärdaten anzeigbar verknüpfen. Die Verknüpfung kann an einer beliebigen, vom Nutzer vorgebbaren Stelle des Primärdatensatzes, d.h. an einem entsprechenden Datensatzteil desselben, erfolgen, im Fall von Textdaten z.B. an einem Textabsatz, einem Wort, einer Zahl etc. Das Anzeigen der Verknüpfung ist vorzugsweise in optischer Form dergestalt realisiert, dass bei einer Wiedergabe von im Client-Rechner 3 gespeicherten Primärdaten am Bildschirm 5 zum betreffenden Primärdatensatz ein Symbol, wie ein hoch- oder tiefgestellter Index, ein spezielles graphisches Element etc., angezeigt wird. Je nach Bedarf und Anwendungsfall kann vorgesehen sein, für verschiedene Sekundärdatensätze oder Sekundärdatensatztypen unterschiedliche Symbole zu benutzen. Als Sekundärdaten können sowohl eigens generierte Daten als auch Teile der Primärdaten dienen.

In einer vorteilhaften Realisierung können für den Fall, dass die Primärdaten von einer Textsammlung, wie einer Gesetzessammlung, gebildet sind, die Sekundärdatensätze textliche Kommentierungen zu bestimmten Primärdatensätzen darstellen. Für eine übliche Anwendung, bei der die Primärdaten-Textsammlung in Kapitel oder Paragraphen gegliedert ist, bestehen insbesondere folgende Möglichkeiten der Sekundärdatenverknüpfung mit Primärdaten als textliche Kommentierungen einzeln oder in beliebiger Kombination.

Erstens kann ein ganzer Paragraph, d.h. der betreffende Primärdatensatz, als Sekundärdatensatz mit einem Primärdaten-Textteil oder einem anderen Paragraphen verknüpft werden, z.B. zwecks Kommentierung, wobei vorliegend der Begriff Paragraph allgemein zur Bezeichnung eines gegliederten Teils der Primärdaten verwendet wird. Diese Verknüpfungsart ermöglicht ein einfaches Hin- und Herwechseln zwischen verschiedenen Paragraphen, d.h. den betreffenden Teilen der Primärdaten, während einer Wiedergabe der Primärdaten. Die Verknüpfung kann bei Bedarf nach unterschiedlichen, vorgebbaren Arten klassifiziert sein, z.B. um bestimmte Relationen zwischen verknüpften Primärdaten-Paragraphen zum Ausdruck zu bringen, bei Gesetzessammlungen beispielsweise zu dem Zweck, hinsichtlich Anwendbarkeit des hinzukommentierten Paragraphen zu unterscheiden.

Zweitens kann die Möglichkeit vorgesehen sein, vom Systemnutzer 6 selbst erzeugte textliche Sekundärdatensätze mit einem oder mehreren ausgewählten Primärdatensätzen z.B. als Textkommentierung zu verknüpfen. Dies kann die Möglichkeit umfassen, mit textlichen Begriffen als Primärdaten eine zugehörige textliche Definition als Sekundärdaten zu verknüpfen. Drittens kann vorgesehen sein, mit auswählbaren Primärdaten Sekundärdaten zu verknüpfen, die der Systemnutzer 6 durch ein sich hierzu öffnendes Textfeld erfassen und speichern kann, das teilweise vorformatiert sein kann. Im Anwendungsbeispiel einer juristischen Gesetzessammlung umfassen die angegebenen Verknüpfungsund damit Kommentierungsmöglichkeiten insbesondere auch alle herkömmlichen Kommentierungsarten, wie das Verknüpfen und damit Kommentieren von Entscheidungsleitsätzen und Rechtsprechungsfundstellen an ein Textstück oder einen Paragraphen der Primärdaten-Gesetzessammlung, eine Kommentierung von Paragraphenketten an Textstücke oder Paragraphen, eine automatische Kommentierung von Paragraphen, die auf eine gleiche Rechtsfolge abstellen, eine Kommentierung zu einem Paragraphen durch einen Sekundärdatentext aus einer amtlichen Begründung einer Gesetzesänderung sowie eine Kommentierung von Rechtsfolgenverweisen und Rechtsgrundverweisen an ein Textstück oder einen Paragraphen.

Die verschiedenen Arten von Verknüpfungen und damit Kommentierungen werden vorzugsweise durch unterschiedliche Symbole angezeigt. Die Aktivierung einer Verknüpfung kann durch eine entsprechende Schaltfläche, z.B. einen Button, einer interaktiven Eingabemaske erfolgen, die auf dem Bildschirm 5 angezeigt wird. Bevorzugt wird dazu jeder der verschiedenen Verknüpfungstypen durch einen eigenen Button in einer Programmleiste der Eingabemaske repräsentiert. Der entsprechende Primärdaten-Textabschnitt, zu dem eine kommentierende Sekundärdatenverknüpfung hergestellt werden soll, wird z.B. mit der Computer-Maus markiert, und durch Auswahl des betreffenden Buttons wird die gewünschte Verknüpfung vorgenommen und abgespeichert, nachdem zuvor der gewünschte Sekundärdatensatz generiert oder ausgewählt wurde. Nach erfolgter Abspeicherung wird die Verknüpfung durch ein vom aktivierten Button abhängiges Symbol repräsentiert, das an der markierten Stelle der Primärdaten eingefügt wird.

Vorzugsweise ist die Implementierung außerdem so gewählt, dass durch Berührung des Symbols mit einem Mauszeiger der Computer-Maus bei Wiedergabe der Primärdaten in einem Fenster im Bildschirm 5 der zugehörige Sekundärdatensatz in einem separaten Fenster oder Teilbereich des Fensters der Primärdaten auf dem Bildschirm 5 erscheint, wobei der eingeblendete Sekundärdatensatz wieder verschwindet, sobald der Mauszeiger das Symbol verlässt. Bei einem Klick mit der Computer-Maus auf das Symbol erscheint hingegen der gespeicherte Sekundärdatensatz dauerhaft, bis er auf Wunsch wieder aktiv z.B. durch entsprechenden Klick mit der Computer-Maus ausgeblendet oder durch die Anzeige eines weiteren Sekundärdatensatzes überblendet wird.

Fig. 2 zeigt nochmals schematisch in der Übersicht den oben geschilderten, typischen Ablauf eines Vorgangs zur Verknüpfung eines Sekundärdatensatzes, z.B. einer textlichen Kommentierung, mit einem Primärdatensatz, z.B. einem textlichen Kommentierungsbereich eines Primärdatentextes, wie er vom Datenverarbeitungssystem der Fig. 1 ausgeführt wird. Zunächst stellt das System einen entsprechenden Teil der gespeicherten Primärdaten dar, so dass der Systemnutzer einen gewünschten Primärdatensatz bzw. Kommentierungsbereich markieren kann, mit dem ein Sekundärdatensatz verknüpft werden soll (Schritt 7). Des weiteren zeigt das System dem Systemnutzer die verschiedenen implementierten Verknüpfungs- bzw. Kommentierungsfunktionen zur Auswahl an (Schritt 8). Nach Auswahl eines gewünschten Verknüpfungs- bzw. Kommentierungstyps nimmt das System in einem Konsistenz- bzw. Stimmigkeitsprüfschritt 9 eine Überprüfung auf Korrektheit des markierten Primärdatensatzes mit dem gewählten Verknüpfungstyp vor, d.h. das System prüft, ob der gewählte Verknüpfungstyp überhaupt zum markierten Primärdatensatz passt oder eine derartige Verknüpfung schon prinzipiell nicht möglich ist. Dazu ist im System ein entsprechender Prüfalgorithmus von an sich herkömmlicher Art implementiert. Dies kann z.B. dadurch realisiert sein, dass die Primärdatensätze einerseits und die Sekundärdatensätze andererseits jeweils in eine endliche Anzahl unterschiedlicher Datensatztypen klassifiziert werden und nur bestimmte Verknüpfungen von gewissen Sekundärdatensatztypen mit gewissen Primärdatensatztypen als stimmig bzw. erlaubt vorgegeben werden. Das System prüft dann jeweils, ob eine aktuell gewählte Verknüpfung in der Menge der als passend bzw. stimmig vorgegebenen Verknüpfungstypen für die gewählten Primär- und Sekundärdatensätze enthalten ist oder nicht. Alternativ kann vorgesehen sein, dass das System dem Nutzer über eine entsprechende Bedienschnittstellen-Eingabenmaske die Stimmigkeitsüberprüfung zur Entscheidung anbietet.

Als nächstes fordert das System zur Dateneingabe für den zu verknüpfenden Sekundärdatensatz bzw. die textliche Kommentierung auf (Schritt 10). Nach erfolgter Dateneingabe durch den Systemnutzer 6 nimmt das System nach Art des Prüfschrittes 9 einen erneuten Stimmigkeitsprüfschritt 11 vor, in welchem es die Stimmigkeit des eingegebenen Sekundärdatensatzes überprüft, d.h. ob der eingegebene Sekundärdatensatz von einem Datensatztyp ist, der zur gewählten Verknüpfungsart und zum gewählten Primärdatensatz passt. Wenn auch diese Stimmigkeitsprüfung positiv verlaufen ist, speichert das System diesen Sekundärdatensatz und seine Verknüpfung mit dem gewählten Primärdatensatz (Schritt 12).

Es versteht sich, dass das Datenverarbeitungssystem von Fig. 1 je nach Bedarf übliche Datenverarbeitungsalgorithmen zur Verarbeitung der gespeicherten Primärdaten beinhalten kann. Dies umfasst insbesondere die Möglichkeit eines anzeigbaren Inhaltsverzeichnisses und/oder Stichwortverzeichnisses, einen oder mehrere Datensuchalgorithmen, wie z.B. für Datenschnellsuche oder Volltextsuche, Datendruckfunktionen zum Drucken einzelner Primärdatenteile mit oder ohne verknüpfte Sekundärdaten, Sicherungsfunktionen, um bei einem Datenverlust die bereits vorhandenen Verknüpfungen von Sekundärdaten mit Primärdaten wieder herstellen zu können, eine Rückverfolgungsfunktionalität zum Rückverfolgen von früher angezeigten Primärdatenteilen, eine Navigationsfunktion zum schnellen Vor-/Zurücknavigieren auf nachfolgende bzw. vorstehende Primärdatenteile und eine Archivierungsfunktion zum automatischen Archivieren früherer Primärdaten, wie solche vor einem Aktualisierungsvorgang. Hierbei kann vorgesehen sein, zu einem aktualisierten Primärdatensatz eine eventuell vorhandene Archivierung eines früheren Primärdatensatzes durch ein zugehöriges Symbol anzuzeigen, das bei der Wiedergabe des aktualisierten Primärdatensatzes mit diesem angezeigt wird. In analoger Weise kann vorgesehen sein, bei der Wiedergabe von Primärdaten nach einer Aktualisierung die Primärdatenteile, die sich geändert haben, in vorgebbarer Weise kenntlich zu machen, z.B. durch andersartige, wie andersfarbige, Darstellung der gesamten betroffenen Primärdatensatzeinheit, wie eines Textkapitels, oder eines repräsentativen Teils, wie eines Titels oder einer Kapitelnummer. Der Wegfall von Primärdatensatzteilen bei einer Aktualisierung kann bei Bedarf ebenfalls beim Wiedergeben der aktualisierten Primärdaten kenntlich gemacht werden, z.B. durch einen Vermerk "aufgehoben".

Des weiteren beinhaltet das System von Fig. 1 eine Netzwerkfunktionalität, die es ermöglicht, Änderungen von Primär- und/oder Sekundärdaten auf einem nutzerseitigen Arbeitsplatz sofort oder in bestimmten Zeitabständen auf gewisse andere oder alle anderen nutzerseitigen Arbeitsplätze zu übertragen und dort abzugleichen, die an das Datennetzwerk angeschlossen sind.

Von wesentlicher Bedeutung ist beim elektronischen Datenverarbeitungssystem der Erfindung, dass es eine spezielle Aktualisierungsfunktionalität besitzt, mit der gespeicherte Primärdaten aktualisiert werden können und dabei die mit den Primärdaten verknüpften Sekundärdaten in besonderer Weise berücksichtigt und behandelt werden, worauf im folgenden näher eingegangen wird.

Zur Zuführung neuer Primärdaten, vorliegend auch Primärneudaten bezeichnet, mit denen nutzerseitig z.B. im Client-Rechner 3 des Systems von Fig. 1 vorhandene Primärdaten zu aktualisieren sind und die zentralenseitig z.B. im Server 1 bzw. der angekoppelten Datenbank 2 vorhanden sind, gibt es verschiedene Möglichkeiten. Eine erste Möglichkeit besteht in einer Online-Aktualisierung, wie sie in Fig. 1 für das dortige System veranschaulicht ist. Der Client-Rechner 3 steht hierbei über eine Online-Verbindung mit dem Server 1 in Datenaustauschverbindung und kann z.B. automatisch abfragen, ob eine neue Primärdatenversion zur Aktualisierung im Server bereitsteht. Wenn festgestellt wird, dass serverseitig neuere Primärdaten vorhanden sind, wird nutzerseitig das Herunterladen der Primärneudaten vom Server 1 angeboten. Wenn der Nutzer 6 eine vorzunehmende Aktualisierung bestätigt, lädt der Client-Rechner 3 die Primärdaten vom Server 1 herunter und speichert sie zunächst in einem dafür vorgesehenen, temporären Verzeichnis. Anschließend wird dem Nutzer 6 eine Übersicht der Änderungen der Primärdaten angezeigt. Der Client-Rechner 3 bietet dem Systemnutzer 6 an, den Aktualisierungsvorgang für die Primärdaten, d.h. deren Installation auf dem Client-Rechner 3, auszulösen.

Eine zweite Möglichkeit der Primärneudatenübertragung besteht darin, die aktualisierenden Primärneudaten über elektronische Post, d.h. über eine Email-Verbindung, zu beziehen. Dazu können die Primärneudaten als Anhang zu einer Email-Nachricht automatisch vom Server 1 zum Client-Rechner 3 übermittelt werden. Der Systemnutzer 6 kann diesen Anhang öffnen und den Installationsanweisungen folgen. Als dritte Möglichkeit bietet sich ein Postversand z.B. einer CD-ROM an, auf der die aktualisierenden Primärneudaten gespeichert sind. Durch Einlegen der CD-ROM in den Client-Rechner 3 kann der Systemnutzer 6 dann automatisch die Installation der Primärneudaten, d.h. die Primärdatenaktualisierung, vornehmen.

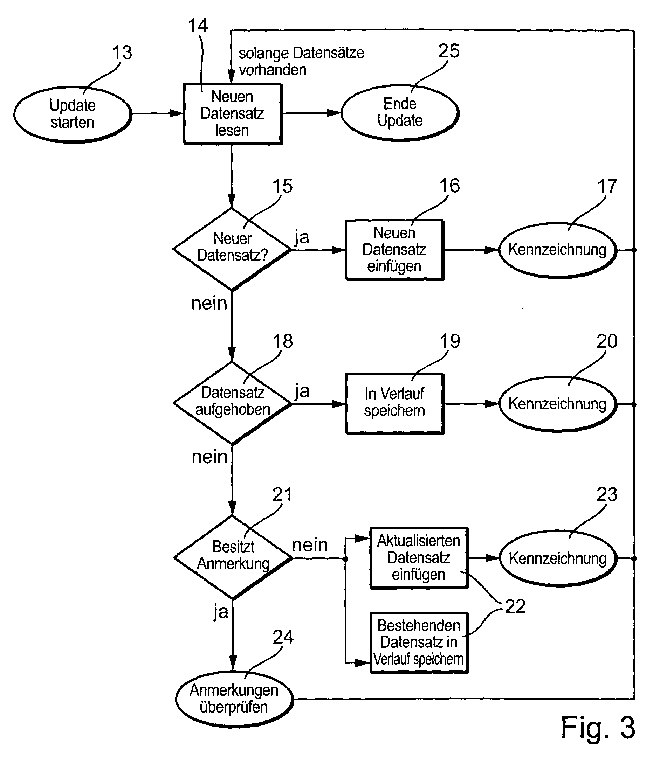

Fig. 3 veranschaulicht im Flussdiagramm einen typischen Primärdaten-Aktualisierungsvorgang, wie er vom Client-Rechner 3 des Systems von Fig. 1 durchgeführt werden kann. Nach Auslösen des Starts eines Update-, d.h. Aktualisierungsvorgangs (Schritt 13) wird ein Datensatz der Primärneudaten gelesen (Schritt 14). Dann prüft der aktualisierende (Client-)Rechner, ob der gelesene Primärneudatensatz ein neuer Datensatz ist, der in den bislang gespeicherten Primärdaten noch nicht vorhanden war (Schritt 15). Wenn dies der Fall ist, wird dieser neue Datensatz an der entsprechenden Stelle in die gespeicherten Primärdaten eingefügt (Schritt 16), und die eingefügten Primärneudaten werden in den Zustand einer Kennzeichnung versetzt (Schritt 17), z.B. mit einem zugeordneten Symbol oder einer speziellen graphischen Darstellungsart, wie oben beschrieben. Anschließend wird ein neuer aktualisierender Primärdatensatz gelesen, solange noch Primärneudatensätze zwecks Aktualisierung vorhanden sind.

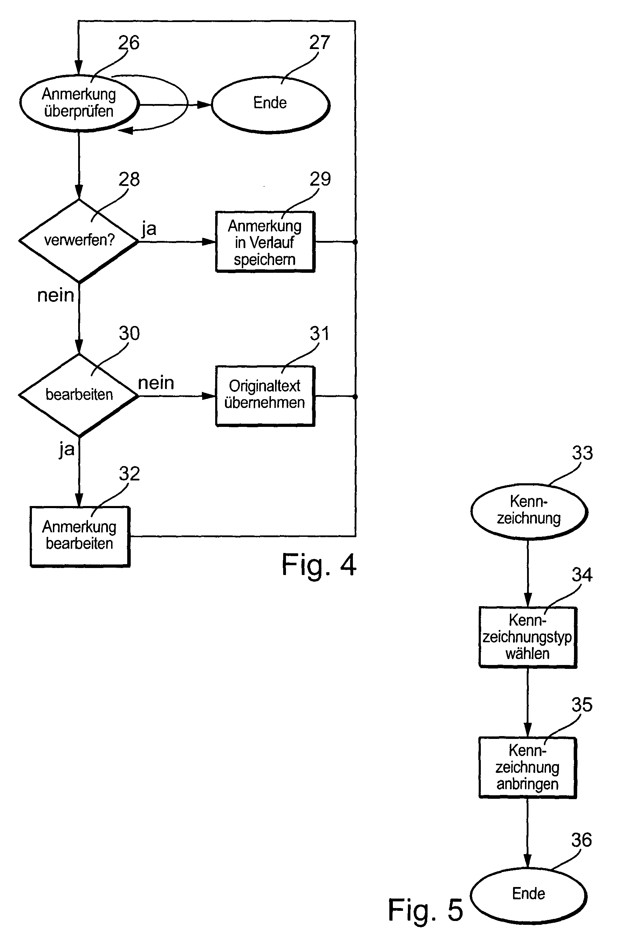

Wenn der aktualisierende Rechner im Abfrageschritt 15 feststellt, dass es sich bei dem gelesenen Primärneudatensatz nicht um einen neuen Datensatz handelt, prüft er als nächstes, ob ein bislang vorhandener Primärdatensatz übersprungen worden ist, d.h. in der aktualisierten Version nicht mehr vorhanden ist und folglich aufgehoben wurde (Schritt 18). Wenn dies der Fall ist, d.h. ein als aufgehoben markierter, bislang gespeicherter Primärdatensatz vorliegt, wird dieser aus dem bestehenden Primärdatenbestand entfernt, jedoch noch in einem Verlauf, der eine Versionisierung beinhaltet, auf dem aktualisierenden Rechner temporär gespeichert, und zwar nur für einen vom Anwender bestimmbaren Zeitraum (Schritt 19). Anschließend wird die Aufhebung dieses Datensatzes wiederum in den Zustand der Kennzeichnung versetzt, in welchem ein spezieller Kennzeichnungsalgorithmus ausgeführt wird, worauf weiter unten in Verbindung mit Fig. 5 näher eingegangen wird. Anschließend wird ein nächster Primärneudatensatz gelesen.

Wenn der aktualisierende Rechner im entsprechenden Abfrageschritt 18 festgestellt hat, dass keine Situation der Aufhebung eines Primärdatensatzes vorliegt, prüft er als nächstes, ob der momentan zu aktualisierende Primärdatensatz eine Verknüpfung mit einem Sekundärdatensatz besitzt, im Beispiel von Fig. 3 als eine Anmerkung angenommen (Schritt 21). Wenn dies nicht der Fall ist, wird der betreffende bisherige Primärdatensatz sogleich im Verlauf gespeichert (Schritt 22) und an dessen Stelle der aktualisierte Primärneudatensatz angelegt und in den Zustand der Kennzeichnung gesetzt (Schritt 23).

Wenn im Verknüpfungsprüfschritt 21 festgestellt wird, dass der zu aktualisierende Primärdatensatz eine Sekundärdatensatz-Verknüpfung beinhaltet, wird diese einer speziellen Stimmigkeitsprüfung unterzogen (Schritt 24), wie sie nachfolgend unter Bezugnahme auf Fig. 4 näher erläutert wird. Auf diese Weise wird mit dem Aktualisierungsvorgang gemäß Fig. 3 fortgesetzt, bis alle Primärneudatensätze gelesen wurden, wonach der Aktualisierungsvorgang beendet ist (Schritt 25).

Fig. 4 zeigt detaillierter den Verfahrenszyklus zur Stimmigkeitsprüfung eines oder mehrerer, mit einem zu aktualisierenden Primärdatensatz verknüpfter Sekundärdatensätze. Dabei werden nacheinander alle Verknüpfungen abgefragt, die zum momentan zu aktualisierenden Primärdatensatz vorhanden sind (Schritt 26), so dass dieser Verfahrenszyklus endet (Schritt 27), wenn alle diese Verknüpfungen abgearbeitet sind. In einem ersten Prüfschritt 28 dieses Verfahrenszyklus bietet der aktualisierende Rechner dem Systemnutzer die Entscheidungsmöglichkeit an, ob der mit dem zu aktualisierenden Primärdatensatz verknüpfte Sekundärdatensatz verworfen werden soll, z.B. weil er nicht mehr zum Inhalt des neuen Primärdatensatzes passt. Vorzugsweise verbindet der aktualisierende Rechner dies mit einer Wiedergabe des betroffenen Sekundärdatensatzes. Der aktualisierende Rechner erfasst die Antwort des Systemnutzers über die betreffende Bedienschnittstelle. Wenn ein Verwerfen der Sekundärdatensatz-Verknüpfung vorgenommen werden soll, wird sie vom aktualisierenden Rechner als aufgehoben markiert, und der Sekundärdatensatz wird im Verlauf gespeichert (Schritt 29).

Wenn die Sekundärdatensatz-Verknüpfung nicht verworfen werden soll, bietet der aktualisierende Rechner dem Anwender die Entscheidung an, ob der bestehende Sekundärdatensatz bearbeitet werden soll (Schritt 30). Der aktualisierende Rechner erkennt die Entscheidung des Anwenders wiederum über die zugehörige Bedienschnittstelle.

Wenn der Sekundärdatensatz unverändert bleiben soll, wird der bisherige Sekundärdatensatz, im Beispiel von Fig. 4 als Originaltext bezeichnet, unverändert übernommen, d.h. gespeichert gehalten (Schritt 31). Andernfalls bietet der aktualisierende Rechner den bestehenden Sekundärdatensatz dem Anwender zur Bearbeitung an, so dass ihn dieser über die Bedienschnittstelle, wie Tastatur und/oder Computer-Maus, in gewünschter Weise überarbeiten kann (Schritt 32). Anschließend speichert der Aktualisierungsrechner den bearbeiteten Sekundärdatensatz, so dass dieser mit dem aktualisierten Primärdatensatz verknüpft ist.

Fig. 5 veranschaulicht im Flussdiagramm die Maßnahmen, die der Aktualisierungsrechner vornimmt, wenn während des Aktualisierungsvorgangs ein jeweiliger Datensatz in den Zustand Kennzeichnung versetzt worden ist, wie in den Schritten 17, 20 und 23 von Fig. 3. Wenn sich ein Datensatz im Zustand Kennzeichnung befindet (Schritt 33), aktiviert der Aktualisierungsrechner zunächst eine Prozedur, mit welcher einer der vorgegebenen Kennzeichnungstypen, wie oben beschrieben, für den betreffenden Datensatz ausgewählt werden kann (Schritt 34). Wie ebenfalls bereits oben ausführlich dargelegt, werden die verschiedenen Kennzeichnungstypen vorzugsweise durch verschiedenfarbige Darstellung und/oder unterschiedliche, darstellbare Symbole voneinander unterschieden. Nachdem der Anwender über die Bedienschnittstelle seine Wahl getroffen hat, bringt der Aktualisierungsrechner die entsprechende Kennzeichnung an der dafür vorgesehenen Stelle des Datensatzes an (Schritt 35), wonach die Kennzeichnungsprozedur abgeschlossen ist (Schritt 36).

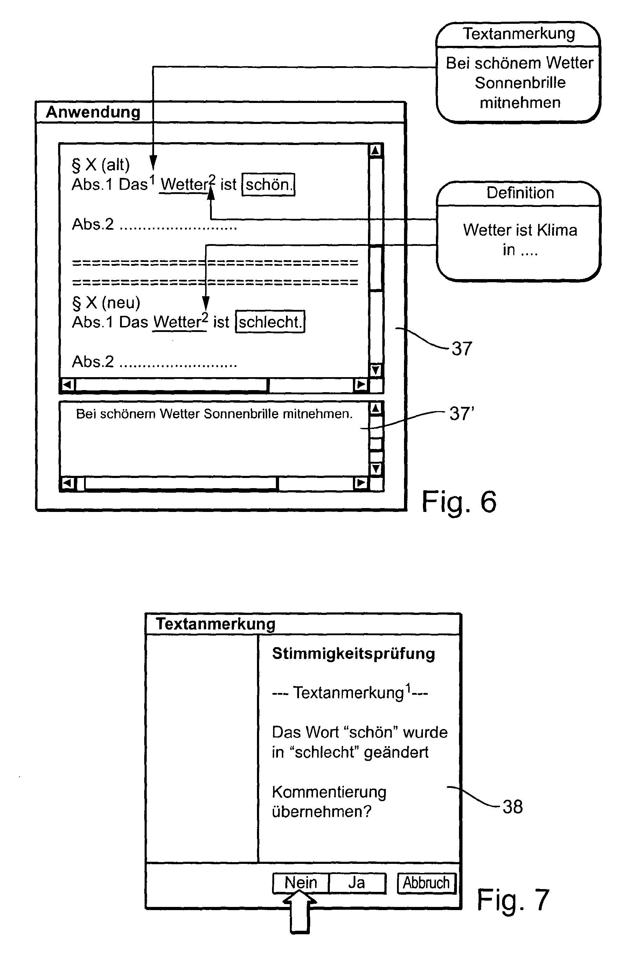

In den Fig. 6 und 7 sind zwei einfache Beispiele spezieller Situationen des oben geschilderten Datenaktualisierungsvorgangs anhand entsprechender Bildschirmdarstellungen veranschaulicht.

So zeigt Fig. 6 ein Textdatenwiedergabefenster 37, wie es auf dem Bildschirm 5 des Client-Rechners 3 von Fig. 1 während eines Aktualisierungsvorgangs dargestellt wird, bei dem der Client-Rechner 3 die Datenaktualisierung menügeführt vornimmt, wobei dem Anwender 6 am Bildschirm 5 entsprechende Datenwiedergaben und Eingabemasken zur Verfügung gestellt werden. Das Bildfenster 37 von Fig. 6 beinhaltet in einer oberen Hälfte die Wiedergabe eines bisher gespeicherten Primärdatensatzes, hier beispielhaft eines mit "§X(alt)" überschriebenen Textabschnitts mit mehreren Textabsätzen, von denen der Einfachheit halber in Fig. 6 nur ein erster Absatz mit dem Textinhalt "Das Wetter ist schön" explizit angegeben ist. Zu diesem Primärdatensatzteil sind zwei Sekundärdatensatz-Verknüpfungen vorhanden, die durch hochgestellte Nummerierungssymbole "1" bzw. "2" bei der Wiedergabe dieses Primärdatensatzteils repräsentiert werden.

Eine erste Verknüpfung beinhaltet als Sekundärdatensatz einen solchen vom Typ einer Textkommentierung, im gezeigten Beispiel mit dem Inhalt "Bei schönem Wetter Sonnenbrille mitnehmen". Die zweite Verknüpfung beinhaltet einen Sekundärdatensatz vom Typ einer textlichen Definition des Begriffs "Wetter" z.B. des Inhalts "Wetter ist Klima in ...". Diese beiden Sekundärdatensätze sind in Fig. 6 durch separate Textboxen veranschaulicht, die auf dem Bildschirm wiedergegeben werden, wenn das sie repräsentierende Symbol in der Primärdatensatzwiedergabe z.B. durch Berühren mit dem Computer-Mauszeiger angesteuert wird. Alternativ können die beiden Sekundärdatensätze auch in einen Teilbereich 37' des Fensters 37 eingeblendet werden.

In einer unteren Hälfte des Bildfensters von Fig. 6 wird ein entsprechender neuer Primärdatensatz wiedergegeben, der bei der Datenaktualisierung den in der oberen Hälfte dargestellten, bisherigen Primärdatensatz ersetzen soll. Da der neue Primärdatensatz Änderungen gegenüber dem bisherigen Primärdatensatz enthält, im Beispiel von Fig. 6 dahingehend, dass sich der Textinhalt des ersten Absatzes in "Das Wetter ist schlecht" geändert hat, und ferner zu dem zu aktualisierenden Primärdatensatz Sekundärdatensatz-Verknüpfungen vorliegen, startet der Aktualisierungsrechner eine Stimmigkeitsprüfroutine, in welcher er dem Anwender am Bildschirm in einem entsprechenden Stimmigkeitsprüffenster anzeigt, dass und wie sich der betroffene Primärdatensatz durch die Aktualisierung ändert und welcher Sekundärdatensatz hinsichtlich Typ und Inhalt mit dem bisherigen Primärdatensatz verknüpft ist.

Das betreffende Anzeigefenster 38 für die erste Sekundärdatensatz-Verknüpfung ist in Fig. 7 dargestellt. Wie daraus ersichtlich, bietet der Aktualisierungsrechner dem Anwender mit dem Stimmigkeitsprüffenster 38 eine Entscheidungsmöglichkeit an, ob die bestehende Sekundärdatensatz-Verknüpfung, in diesem Fall die textliche Kommentierung, übernommen werden soll. Da im gezeigten Beispiel die Beibehaltung dieses verknüpften Sekundärdatensatzes wegen des geänderten Inhalts des Primärdatensatzes nicht sinnvoll ist, wird der Anwender von einer Übernahme, d.h. Beibehaltung, dieser Sekundärdatensatz-Verknüpfung absehen, wie in Fig. 7 mit einem dicken Pfeil auf einen "Nein"-Button veranschaulicht. Nachdem der Aktualisierungsrechner die Entscheidung des Anwenders erkannt hat, löscht er diese Sekundärdatensatz-Verknüpfung in der Wiedergabe des aktualisierten Primärdatensatzes, d.h. der Index "1" ist in der aktualisierten Primärdatenwiedergabe in der unteren Hälfte des Bildfensters 37 von Fig. 6 entfallen. Das Stimmigkeitsprüffenster gemäß Fig. 7 bildet somit eine Sekundärdatensatz-Anzeigemaske und eine Steuerungseingabemaske zur Sekundärdatensatzaktualisierung.

In gleicher Weise wird mit der Stimmigkeitsprüfung der anderen Sekundärdatensatz-Verknüpfung fortgesetzt. Da diese im gezeigten Beispiel auch für die aktualisierten Primärdaten weiterhin sinnvoll ist, wird sie der Anwender über ein Stimmigkeitsprüffenster analog Fig. 7 durch Aktivieren eines zugehörigen "Ja"-Buttons übernehmen, wobei ihm der Aktualisierungsrechner zusätzlich die Möglichkeit anbietet, den zu übernehmenden Sekundärdatensatz in einer gewünschten Weise zu ändern und damit ebenfalls zu aktualisieren. Im Fall von Textinhalten stellt der Aktualisierungsrechner dazu den zu übernehmenden Sekundärdatensatz am Bildschirm so dar, dass der Anwender anschließend die gewünschten Änderungen vornehmen kann, wonach der Aktualisierungsrechner den geänderten Sekundärdatensatz unter beibehaltener Verknüpfung mit dem aktualisierten Primärdatensatz speichert. Das zugehörige Verknüpfungssymbol "2" wird für die beibehaltene Verknüpfung auch im aktualisierten Primärdatensatz angezeigt, wie in Fig. 6 veranschaulicht.

Wie das obige Ausführungsbeispiel deutlich macht, stellt die Erfindung ein elektronisches Datenverarbeitungssystem zur Verfügung, das eine komfortable Behandlung von mit Primärdaten verknüpften Sekundärdaten bei einer Aktualisierung der Primärdaten bietet, insbesondere die Möglichkeit, vorhandene Sekundärdatenverknüpfungen während eines Primärdaten-Aktualisierungsvorgangs nach Wahl des Anwenders zu löschen oder modifiziert oder unverändert beizubehalten. Wenngleich im obigen Ausführungsbeispiel primär auf eine Anwendung eingegangen wurde, bei welcher die Primärdaten eine Textsammlung und die Sekundärdaten textliche Anmerkungen dazu repräsentieren, versteht es sich, dass sich die Erfindung für beliebige andere Anwendungen eignet, d.h. für Primärdaten und Sekundärdaten beliebigen Inhalts bzw. Informationsgehaltes.

Des weiteren kann der Client-Rechner Bestandteil eines Netzwerkes sein, an welches weitere Client-Rechner angeschlossen sind, wobei nur berechtigte Systemnutzer die Möglichkeit haben, allgemein zugängliche Sekundärdatensätze zu generieren und den übrigen Clients über das Netzwerk zur Verfügung zu stellen. Selbstverständlich steht einem jeden Client die Möglichkeit offen, individuelle Sekundärdatensätze zu generieren, welche dann ausschließlich auf seinem Client-Rechner zugänglich sind.

In einer für bestimmte Anwendungsfälle vorteilhaften Ausprägung ist das vernetzte Datenverarbeitungssystem so ausgelegt, dass es die vom als berechtigt ausgewiesenen Systemnutzer generierten, allgemein zugänglichen Sekundärdatensätze als solche vom Primärdatentyp behandelt, d.h. diese bilden dann Primärnebendaten, die in der generierten Weise mit den als Primärhauptdaten fungierenden, eigentlichen Primärdaten verknüpft sind. Entsprechend diesem Primärdatentypus können diese allgemein zugänglichen Sekundärdatensätze von anderen Systemnutzern bzw. Client-Rechnern, die über keine diesbezügliche Änderungsberechtigung verfügen, abgerufen und angezeigt, aber nicht geändert werden. Die generierten, allgemein zugänglichen Sekundärdatensätze werden folglich in diesem Fall zusammen mit den übrigen Primärdaten, d.h. den Primärhauptdaten, als neue Primärdatensätze behandelt, die vom System in der oben beschriebenen Weise verarbeitet werden. Es versteht sich, dass dazu das System geeignete, herkömmliche Mittel aufweist, um die von einem berechtigten Systemnutzer generierten, allgemein zugänglichen Sekundärdatensätze vom generierenden Client-Rechner anderen Client-Rechnern abrufbar zur Verfügung zu stellen, z.B. durch Übertragen an einen zentralen Server-Rechner und dortiges Abspeichern. Mit dieser Systemrealisierung können somit von einem berechtigten Systemnutzer, z.B. einem bevorrechtigten "Master"-Nutzer, mit den Primärdaten verknüpfte Sekundärdaten generiert und allen Systemnutzern zur Einsicht bzw. zur Aktualisierung der bei diesen vorhandenen Primärdaten einschließlich der dort etwa bereits vorhandenen, allgemein zugänglichen Sekundärdaten bereitgestellt werden. Die verschiedenen Systemnutzer haben weiterhin die Möglichkeit, ihre individuellen Sekundärdaten zu den Primärdaten und den allgemein zugänglichen Sekundärdaten zu generieren.

Bei einer weiteren vorteilhaften Systemrealisierung weist der Client-Rechner verschiedene Betriebsarten für die Weiterverarbeitung von generierten Sekundärdatensätzen auf. In einer ersten Betriebsart legt er diese, wie oben beschrieben, lokal nur in seinem Speicher bzw. zum Zugriff nur für den generierenden Systemnutzer ab. In einer zweiten Betriebsart, in die er z.B. vom Systemnutzer umgeschaltet werden kann, stellt der Client-Rechner die generierten Sekundärdaten zusätzlich einer Zentralstelle, wie einem Server-Rechner, zur Verfügung, sei es durch direkte elektronische Datenübertragung oder auf andere Weise, z.B. Abspeicherung auf einem transportablen und von der Zentralstelle auslesbaren Datenträger. In der Zentralstelle können diese Sekundärdatensätze bei Bedarf auf Plausibilität bzw. Richtigkeit geprüft und bei bestandener Prüfung zentral abgespeichert werden. Bei nichtbestandener Prüfung kann eine Rückmeldung an den generierenden Client-Rechner bzw. eine Rücksendung der betreffenden Daten an diesen vorgesehen sein. Diese Systemvariante ermöglicht somit bei Bedarf eine zentrale Ablage und Verfügbarkeit von an einem oder mehreren Client-Rechnern dezentral generierten Sekundärdatensätzen.

Wenngleich im gezeigten und oben beschriebenen Ausführungsbeispiel verschiedentlich angegeben ist, dass es sich bei den Primärdaten um einen Text und bei den Sekundärdaten um eine mit dem Text verknüpfte textliche Kommentierung handeln kann, versteht es sich, dass dies kein zwingendes Merkmal der Erfindung ist, sondern die Primärdaten auch beliebige andere Daten und ebenso die Sekundärdaten damit verknüpfte, beliebige andere Daten sein können. So kann es sich in einer entsprechenden Realisierung beim erfindungsgemäßen Datenverarbeitungssystem z.B. um ein solches handeln, das einem zu steuernden oder regelnden technischen System, wie einer Maschine, einem Roboter oder dergleichen, zugeordnet ist und für dieses entsprechende Daten verarbeitet, z.B. in einer Funktion als Steuer- oder Regelsystem der Maschine, des Roboters oder dergleichen. Es kann sich dann z.B. bei den Primärdaten um Grundanweisungsbefehle an die Maschine handeln, und bei den damit verknüpften Sekundärdaten um von diesen Grundanweisungsbefehlen abhängige Detailanweisungen oder anderweitige Informationen für die Maschine bzw. für die anderweitige gesteuerte Vorrichtung. Erfindungsgemäß können auch in diesem Fall die Primärdaten in datenverarbeitungstechnisch vorteilhaft einfacher Weise unter Aufrechterhaltung bzw. Änderungsmöglichkeit der mit zu ändernden Primärdaten verknüpften Sekundärdaten aktualisiert werden, um z.B. ein neues bzw. geändertes Steuerungs-/Regelungsverhalten für die gesteuerte Vorrichtung zu implementieren.

Ferner kann es sich bei dem erfindungsgemäßen Datenverarbeitungssystem um ein solches handeln, das einer Vorrichtung oder einem Gerät, wie einem Fahrzeugelektronik-Steuergerät oder einer TV-Elektronik, zugeordnet ist und für diese Daten verarbeitet, z.B. in einer Funktion als Diagnose- und Wartungssystem. Es kann sich dann z.B. bei den Primärdaten um Grunddiagnosedaten handeln und bei den damit verknüpften Sekundärdaten um von diesen Grunddiagnosedaten abhängige spezielle Detaildiagnosedaten. Erfindungsgemäß können auch in diesem Fall Primärdaten in datenverarbeitungstechnisch vorteilhaft einfacher Weise unter Aufrechterhaltung bzw. Änderungsmöglichkeit der mit zu ändernden Primärdaten verknüpften Sekundärdaten aktualisiert werden, um z.B. baureihenspezifische Modifizierungen in der Elektronik berücksichtigen zu können.

## Patentansprüche

1. Elektronisches Datenverarbeitungssystem mit
- Datenspeichermitteln (3) zur Speicherung von vorgebbaren Primärdaten und Sekundärdaten,
- Sekundärdaten-Zuordnungsmitteln (3, 37) zum Bereitstellen einer anzeigbaren Verknüpfung wenigstens eines vorgebbaren Sekundärdatensatzes mit wenigstens einem zugeordneten Primärdatensatz und
- Primärdaten-Aktualisierungsmitteln (3, 13 bis 25) zum Aktualisieren von gespeicherten Primärdaten mit einlesbaren Primärneudaten,
**dadurch gekennzeichnet, dass**
- die Primärdaten-Aktualisierungsmittel (3, 13 bis 25) darauf ausgelegt sind, zur Aktualisierung der gespeicherten Primärdatensätze nicht zu ändernde Primärdaten in den Datenspeichermitteln gespeichert zu belassen und zu ändernde Primärdaten durch Einspeichern der zugehörigen Primärneudaten in die Datenspeichermitteln zu ersetzen, und
- Sekundärdaten-Aktualisierungsmittel (3, 26 bis 32, 37, 38) vorgesehen sind, die Änderungsdetektionsmittel zur Erkennung einer Aktualisierungs-Neuspeicherung von Primärdaten eines Primärdatensatzes, mit dem ein Sekundärdatensatz verknüpft ist, Anzeigemittel zum Anzeigen eines Sekundärdatensatzes, der einem aktualisierend geänderten Primärdatensatz zugeordnet ist, nutzerbetätigbare Steuerungseingabemittel zur Steuerung einer Sekundärdatensatzaktualisierung und Sekundärdaten-Neuspeicherungsmittel zum Neuspeichern eines angezeigten, mit einem aktualisierend geänderten Primärdatensatz verknüpften Sekundärdatensatzes in Abhängigkeit von einer Betätigung der Steuerungseingabemittel zur Sekundärdatensatzaktualisierung umfassen.

2. Elektronisches Datenverarbeitungssystem nach Anspruch 1, weiter **dadurch gekennzeichnet, dass** die Steuerungseingabemittel zur Sekundärdatensatzaktualisierung ein nutzerbetätigbares Dateneingabemittel zum Ändern des angezeigten, einem aktualisierend geänderten Primärdatensatz zugeordneten Sekundärdatensatzes und/oder ein nutzerbetätigbares Bestätigungseingabemittel zum unveränderten Beibehalten des angezeigten Sekundärdatensatzes und/oder ein nutzerbetätigbares Löscheingabemittel zum Löschen der Verknüpfung des angezeigten Sekundärdatensatzes mit dem zugeordneten, aktualisierend geänderten Primärdatensatz beinhalten.

3. Elektronisches Datenverarbeitungssystem nach Anspruch 1 oder 2, weiter **gekennzeichnet durch** eine Benutzerschnittstelle mit interaktiven optischen Anzeigemitteln (38), die eine Sekundärdaten-Anzeigemaske und eine Steuerungseingabemaske zur Sekundärdatensatzaktualisierung beinhalten.

4. Elektronisches Datenverarbeitungssystem nach einem der Ansprüche 1 bis 3, weiter **gekennzeichnet durch** Sekundärdatensatz-Klassifizierungsmittel zur Klassifizierung eines Sekundärdatensatzes in einen von mehreren vorgebbaren Sekundärdatensatztypen mit nutzerbetätigbaren Auswahleingabemitteln zur Auswahl eines Sekundärdatensatztyps für einen jeweiligen Sekundärdatensatz.

5. Elektronisches Datenverarbeitungssystem nach Anspruch 4, weiter **dadurch gekennzeichnet, dass** die Sekundärdatensatz-Zuordnungsmittel Verknüpfungsanzeigemittel umfassen, welche die Verknüpfung eines Sekundärdatensatzes mit einem Primärdatensatz durch ein vom Sekundärdatensatztyp abhängiges Symbol bei einer Wiedergabe des zugeordneten Primärdatensatzes anzeigen.

6. Elektronisches Datenverarbeitungssystem nach einem der Ansprüche 1 bis 5, weiter **dadurch gekennzeichnet, dass** die Sekundärdatensatz-Zuordnungsmittel Bezeichnungs- und/oder Markierungsmittel zum nutzerseitigen Bezeichnen oder Markieren eines Ziel-Primärdatensatzes und Verknüpfungserzeugungsmittel beinhalten, die einen nutzerseitig eingegebenen oder aus den gespeicherten Primärdaten ausgewählten Sekundärdatensatz dem Ziel-Primärdatensatz verknüpfend zuordnen.

7. Elektronisches Datenverarbeitungssystem nach Anspruch 6, weiter **dadurch gekennzeichnet, dass** die Sekundärdatensatz-Zuordnungsmittel den ausgewählten Sekundärdatensatz an einer vorgebbaren Stelle des Ziel-Primärdatensatzes verknüpfen.

8. Elektronisches Datenverarbeitungssystem nach Anspruch 7, weiter **dadurch gekennzeichnet, dass** die Sekundärdatensatz-Zuordnungsmittel eine mit einem Sekundärdatensatz verknüpfte Stelle eines Primärdatensatzes bei einer Primärdatensatzwiedergabe nutzerangefordert unterscheidbar anzeigen.

9. Elektronisches Datenverarbeitungssystem nach einem der Ansprüche 1 bis 8, weiter **dadurch gekennzeichnet, dass** Archivierungsmittel vorgesehen sind, die dafür eingerichtet sind, bei einer Aktualisierung ersetzte Primärdatensätze und/oder Sekundärdatensätze abrufbar zu archivieren.

10. Elektronisches Datenverarbeitungssystem nach einem der Ansprüche 1 bis 9, weiter **dadurch gekennzeichnet, dass** Mittel zur unterscheidbaren Anzeige von bei einer Aktualisierung geänderten Primärdatensatzteilen bei einer Primärdatenwiedergabe vorgesehen sind.

11. Elektronisches Datenverarbeitungssystem nach einem der Ansprüche 1 bis 10, weiter **gekennzeichnet durch** einen oder mehrere Client-Rechner, welche jeweils die Datenspeichermittel, die Sekundärdaten-Zuordnungsmittel, die Primärdaten-Aktualisierungsmittel und die Sekundärdaten-Aktualisierungsmittel beinhalten.

12. Elektronisches Datenverarbeitungssystem nach Anspruch 11, weiter **dadurch gekennzeichnet, dass** der jeweilige Client-Rechner wenigstens zwei Betriebsarten zur Sekundärdatenverarbeitung aufweist, wobei er generierte Sekundärdaten in einer ersten Betriebsart nur lokal abspeichert und sie in einer zweiten Betriebsart zusätzlich einem oder mehreren weiteren Rechnern des Systems verfügbar macht.
